# EUROPEAN PATENT APPLICATION

(11) **EP 4 190 971 A1**
(43) Date of publication of application: **07.06.2023**
(21) Application number: 21212480.4
(22) Date of filing: 06.12.2021
(51) Int. Cl.: D21H 17/69, C09C 1/36

(54) **TITANIUM DIOXIDE PIGMENT PARTICLES COVALENTLY BONDED WITH A FUNCTIONALIZED NANOCELLULOSE**

(71) Applicant: Kronos International, Inc., 51373 Leverkusen (DE)
(72) Inventor: The designation of the inventor has not yet been filed

(57) **Abstract**

The invention relates to a composite material comprised of titanium dioxide pigment particles and nanocellulose wherein the titanium dioxide pigment particles and the nanocellulose are covalently bonded to each other via at least one carboxyl groups and/or at least one phosphate groups. In addition, the present invention pertains to a method for obtaining said composite material, the composite material obtained by said method. Finally, the present invention relates to an aqueous slurry and the use of the aqueous slurry in the manufacture of paper, décor papers, corrugated cardboards, and packaging.

## Description

### Field Of The Invention

The invention relates to a composite material comprised of a titanium dioxide pigment particle and nanocellulose, characterized in that the titanium dioxide pigment particle is covalently bonded to the nanocellulose by at least one carboxyl group and/or at least one phosphate group. In addition, the present invention pertains to a method for obtaining said composite material, and to the composite material obtained by said method. Finally, the present invention relates to an aqueous slurry and the use of the aqueous slurry in the manufacture of paper, décor papers, corrugated cardboards, and packaging.

### Technological Background Of The Invention

In paper laminate applications, white or light-colored papers are required to exhibit a high opacity. Décor papers and décor foils are widely used in the production of decorative surfaces and commonly comprised of a stack of papers which are impregnated and cured under pressure. The laminates do not serve merely as facing paper by hiding unattractive wood material surfaces but in addition as carrier for functional papers. As white pigment, titanium dioxide is commonly used in high-end laminates. The titanium dioxide pigment imparts a white color to the laminate and provides the opacity necessary to hide the afore-mentioned unattractive wood substrate. To provide excellent hiding power, the pigments need to be ideally dispersed and thus deagglomerated. This agglomeration behavior in dispersion results mainly from large Hamaker constants of the particles.

In laminate applications, however, titanium dioxide pigment particles tend to agglomerate which imparts the hiding power. To compensate this mediocre hiding power, a higher amount of titanium dioxide pigment particles is employed which is economically detrimental given the fact that titanium dioxide is one of the most expensive components of a laminate.

In the field of packaging there is an increasing demand to replace environment unfriendly plastics by sustainable cellulose-based materials. Nanocellulose is of particular interest, as it imparts gas impermeability to packing which is beneficial for food packaging and can be provided as a foil coating. In this field, titanium dioxide is also the pigment of choice to hide unattractive brown or transparent material.

Titanium dioxide pigment is also provided in the form of a slurry. To disperse the pigment and provide a stable slurry, dispersing aids are employed. Many effective dispersing agents are prohibited by health and environment regulations for various reasons.

Hence, there is a need in the art for titanium dioxide pigment particles which provide excellent and homogenous distribution on cellulose which provides superior opacity and has superior dispersing features without the need for additional hazardous, non-sustainable and expensive dispersing agents.

### Object And Brief Description Of The Present Invention

It has been surprisingly found that composite material comprised of a titanium dioxide pigment particle and nanocellulose, wherein the titanium dioxide pigment particle is covalently bonded to the nanocellulose by at least one carboxyl group and/or at least one phosphate group suppress agglomeration on cellulose and thus, provide excellent and homogenous distribution on cellulose which provides superior opacity. Due the covalent bond, the titanium dioxide pigment particle is immobilized on the nanocellulose and can thus not be easily removed as opposed to van der Waals or hydrogen bonds. Notably, titanium dioxide is capable of forming hydrogen bonds to a limited extent. Further, the nanocellulose functions as a dispersing agent, and imparts superior dispersibility properties to the composite in aqueous media and renders the addition of hazardous and expensive dispersing agents superfluous.

Therefore, in a first aspect, the invention pertains to a composite material, characterized in, that the titanium dioxide pigment particle is covalently bonded to the nanocellulose by at least one carboxyl group and/or at least one phosphate group.

In a second aspect, the invention refers to a method for obtaining a composite material comprised of titanium dioxide pigment particle and nanocellulose, the method comprises the steps of (i) providing an aqueous slurry comprised of a titanium dioxide pigment particle; (ii) providing an aqueous slurry comprised of nanocellulose; (iii) mixing the aqueous slurry comprised of the titanium dioxide pigment particle with the aqueous slurry comprised of nanocellulose to obtain a mixed aqueous slurry; (iv) adding an organic solvent to the mixed aqueous slurry to obtain the composite material; and (v) optionally, drying the composite material.

In a further aspect, the invention is directed to a composite material obtainable by the method of the invention.

In yet a further aspect, the invention pertains to an aqueous slurry comprising the composite material as claimed herein.

Finally, the invention is directed to the use of a method for obtaining papers, décor papers, corrugated cardboards, and packaging.

Further advantageous embodiments are covered by the dependent claims.

### Brief Description Of The Figures

**Fig. 1****:** Scanning electron micrograph of a nanocellulose prior to the mechanically fibrillation using a M-110 F Microfluidizer Processor with a 200 µm cell diameter.
**Fig. 2****:** Scanning electron micrograph of a nanocellulose after the twelve cycles during which the nanocellulose was mechanically fibrillated using a M-110 F Microfluidizer Processor with a 200 µm cell diameter at pressures up to 2,578 bar.
**Fig. 3****:** Laser diffraction analysis of Example 1 of the present invention which is a composite comprised of titanium dioxide particles covalently bonded with carboxyl-functionalized nanocellulose.

### Description Of The Invention

These and further aspects, features and advantages of the invention become apparent to the skilled person from a study of the following detailed description and claims. Each feature from one aspect of the invention may also be used in any other aspect of the invention. Further, of course, the examples contained herein are intended to describe and illustrate the invention, but not to limit it, and in particular, the invention is not limited to such examples. Numerical ranges stated in the form "from x to y" include the values mentioned and those values that lie within the range of the respective measurement accuracy as known to the skilled person. If several preferred numerical ranges are stated in this form, of course, all the ranges formed by a combination of the different end points are also included.

All percentages stated in connection with the compositions herein described relate to percent by weight (wt.%) unless explicitly stated otherwise, respectively based on the mixture of composition in question.

"At least one" as used herein relates to one or more, i. e., 1, 2, 3, 4, 5, 6, 7, 8, 9 or more. With respect to a coating, for example, the value relates to the coating and not to the absolute number of molecules in the coating.

The composite material is comprised of titanium dioxide pigment particles and nanocellulose, wherein the titanium dioxide pigment particles are covalently bonded to the nanocellulose by at least one carboxyl group and/or at least one phosphate group. The titanium dioxide pigment particles are manufactured according to the sulphate process or chloride process, both well-established in the art. The pigment particle may be present in the crystal structures of rutile, anatase or brookite, usually in the crystal structures of rutile or anatase. Preferably, said pigment particle comprises at least 98 wt.%, preferably at least 99 wt.% rutile referred to the total weight of said pigment particle. To adapt the physical properties according to the requirements of the application, the obtained pigment particle is commonly subject to an after-treatment by applying at least one coating onto said pigment particle. More information of after-treatments and coating are provided below.

The pigment particles are preferably in the form of primary particles as opposed to agglomerates. "Primary particle", as used herein, relates to a particle which may form together with at least one other particle to form agglomerates and aggregates. This definition of primary particles also covers twins and multiple twins which are known in the art and can be analyzed by, for example, TEM analysis. If necessary, the titanium dioxide pigment particle or the agglomerates thereof may be milled before or after using established methods in order to increase the proportion of the pigment particle that is present as primary particles as opposed to agglomerates.

The pigment particles may be subject to the well-known and established after-treatment and may comprise the application of inorganic and/or organic compounds to adjust the properties of the obtained particles to its end-use. To that end, in a preferred embodiment, at least one coating selected from the group consisting of silicon dioxide, aluminum oxide, zirconium oxide, tin oxide, cerium oxide, phosphorous oxide or a mixture thereof is applied. The metal oxides described in connection with the after-treatment include the respective hydroxides, oxide hydroxide and water-containing phases. Optionally, nitrate can be included which is known for its greying-resistance in the laminate field. The thickness of the coating applied to the particles within the scope of the after-treatment is within the nanometer range, preferably smaller than 10 nm, more preferably from 1 nm to 10 nm, so that the particle size of the after-treated particles does not change significantly as compared to the untreated particles. Subsequently to the after-treatment, the particles are separated off, filtered, washed, and dried at a temperature of at least 105 °C with the aim to liberate the water adhered to the after-treated particle, and optionally micronized, for example, in a steam jet mill. The micronization is usually affected through a steam jet mill. During or prior to the micronization an organic compound, such as silanes, siloxanes, trimethylolpropane (TMP), trimethylolethane (TME), hexametaphosphate (HMP), etc. may be added. By doing so the matrix compatibility, especially towards surface-active additives can be improved. Those skilled in the art are aware of such methods.

Within the scope of the invention, the titanium dioxide pigment particle has a primary size such that it scatters the visible light is scatter, ideally to a high rate. The particle size is the mass-related median d50 (hereinafter: d50) of from 200 nm to 400 nm determined by disc centrifuge.

In a preferred embodiment of the present invention, the titanium dioxide pigment particle is covalently bonded to the nanocellulose by at least one phosphate group. The latter shows an increased affinity to titanium dioxide pigment particles compared to a carboxyl group.

Nanocellulose also known as microfibrillated cellulose (MFC) is a material made from cellulose fibers where the individual microfibrils have been partly or totally detached from each other. Methods for obtaining nanocellulose are known in the art. It can be obtained by mechanical treatment or treatment with various chemicals or enzymes or bacteria. Cellulose is comprised of glucose units which are linked to each other, mainly as a linear chain of glucose units. Nanocellulose is normally quite thin with a thickness of up to 20 nm and possess a length of between 100 nm to 10 µm or longer between 10 to 100 µm. The manufacture of nanocellulose is well known in the art, for example, in WO 2007/091942 or in the review of V. Thakur et al., "Recent advances in nanocellulose processing, functionalization and applications: a review" in Mater Adv; 2017; 2; 1872-1895. The disclosures of these documents are included herein by reference. The nanocellulose has preferably a high content of glucan, preferably at least 75 wt.%, more preferably at least 90 wt.% referred to the total weight of the nanocellulose. The molecular weight is in general of between 10,000 g/mol and 2,000,000 g/mol, or between 50,000 g/mol and 1,000,000 g/mol, and preferably between 100,000 g/mol and 500,000 g/mol. Preferably, the nanocellulose with the afore-mentioned molecular weights is mechanically fibrillated before it is used to obtain the composite material according to the present invention.

When linked, aside from the last units at the end of the chain, each unit has three available hydroxyl groups which can be substituted by the at least one carboxyl group and/or the at least one phosphate group. Preferably, the degree of substitution of the hydroxyl groups of the nanocellulose by the at least one carboxyl group and/or the at least one phosphate group is between 0.01 to 1, preferably 0.02 to 0.5. The substitution degree of 3 is the maximum due to the three available hydroxy groups.

The substitution reactions are known in the art. To obtain a carboxyl group substituted nanocellulose also known as carboxymethylcellulose (CMC), nanocellulose can be brought to reaction with monochloroacetic acid in the presence of sodium hydroxide in an organic solvent. These and further procedures are known from, for example, G. Zhang et al. "Preparation and characterization of sodium carboxymethyl cellulose from cotton stalk using microwave heating" in J Chem Technol Biotechnol 2011; 86: 584 - 9; Q. Lin et al. "Protein adsorption behaviors of carboxymethylated bacterial cellulose membranes" in Int Biol Macromol 2015; 73: 264 - 9; H. Yan et al "Sorption of methylene blue by carboxymethyl cellulose and reuse process in a secondary sorption" in Colloids Surf A 2011; 380: 143 - 51. The disclosures of these documents are included herein by reference.

To obtain a phosphate group substituted nanocellulose, nanocellulose can be brought to reaction with phosphoric acid and urea. These and further procedures are known, for example, from V. Thakur et al., "Recent advances in nanocellulose processing, functionalization and applications: a review" in Mater Adv; 2017; 2; 1872-1895, in particular in section 1.4. The disclosure of this document is included herein by reference.

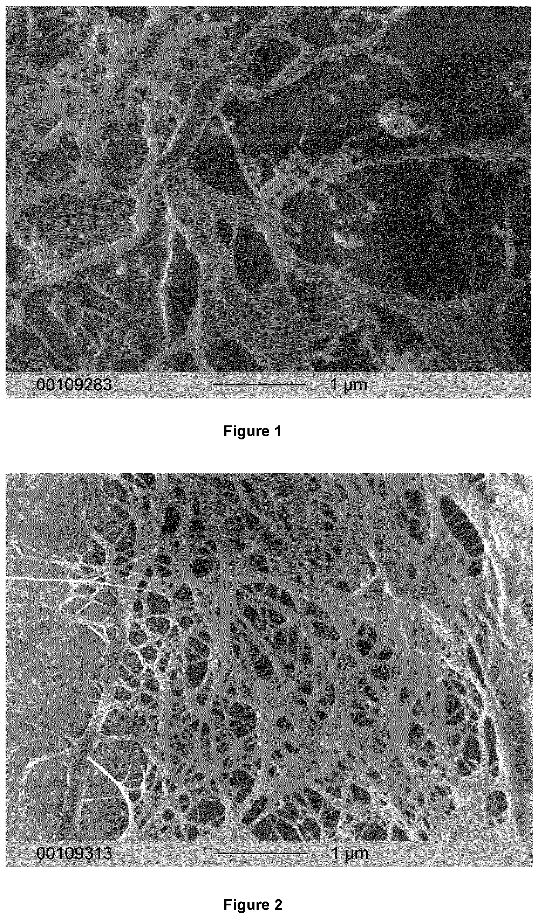

The composite according to the invention may comprise one cellulose fiber or more fibers such as 2, 3, 4 or more. These fibers may be interconnected as depicted in Figures 1 and 2.

In another preferred embodiment, the cellulose was obtained by mechanical treatment using shear forces. At least one cycle can be conducted. In a particularly preferred embodiment, the nanocellulose is mechanically treated twice, i. e., subsequent to the first treatment, the treated nanocellulose is treated for a second time. In another preferred embodiment, the nanocellulose is mechanically treated six times. In yet another preferred embodiment, the nanocellulose is mechanically treated twelve times. An image of this nanocellulose is shown in Figure 2.

Apparatuses which can used for this mechanical treatment are known in the art. They are optionally equipped with an inlet reservoir in which the aqueous nanocellulose dispersion can be filled. The reservoir is connected to a high-pressure pump pumping the aqueous nanocellulose dispersion through a 200 µm cell thereby a pressure of about 2500 bar is built. Such an apparatus is the M-110 F Microfluidizer Processor commercially available from Microfluidics in Westwood, Massachusetts, USA.

In a preferred embodiment, the nanocellulose is present as fibers. In this regard, the nanocellulose has a fiber shape with a width-length ratio of 1:2 to 1:50,000, preferably of 1:3 to 1:100. As already described herein, the nanocellulose is normally quite thin with a thickness of up to 20 nm and possess a length of between 100 nm to 10 µm or longer between 10 to 100 µm. The fibers may form net like structures as shown in Figures 1 and 2.

In a preferred embodiment of the present invention, the weight ratio of titanium dioxide and nanocellulose is between 10⁻⁶ to 1 and 10⁻¹ to 1, and more preferably between 10⁻⁴ to 1 and 3 × 10⁻² to 1.

In a further aspect the present invention pertains to a method obtaining a composite material comprised of titanium dioxide pigment particle and nanocellulose, the method comprises the following steps:
(i) providing an aqueous slurry comprised of titanium dioxide pigment particles;
(ii) providing an aqueous slurry comprised of nanocellulose;
(iii) mixing the aqueous slurry comprised of titanium dioxide pigment particles with the aqueous slurry comprised of nanocellulose to obtain a mixed aqueous slurry;
(iv) adding an organic solvent to the mixed aqueous slurry to obtain the composite material; and
(v) optionally drying the composite material.

Steps (i) to (iii) can be conducted by known methods and techniques, if necessary, at elevated temperature and under agitation. It is known that an aqueous slurry with 4 wt.% of nanocellulose based on the total weight of the slurry already possess a high viscosity and appears as a thick gel which makes it burdensome to further process it. Due to the viscosity, it is preferred to employ at most 4 wt.%, more preferred at most 2 wt.%, and even more preferred 1 wt.%.

The organic solvent used in step (iv) can be any organic solvent suitable for this purpose. Preferably, it is selected from the group of ethanol, methanol, propanol, butanol, acetone, aliphatic solvent lice acetone, and mixtures thereof. Without wishing to be bond to a specific theory, it is believed that the addition provokes the bond formation between the nanocellulose and the titanium dioxide.

Alternatively, the composite material can be obtained by other means and methods than the addition by an organic solvent in step (iv), for example, by redox reaction.

The drying step (v) can be accomplished by any suitable means, preferably by spray drying.

In a further aspect, the present invention refers to a composite material obtainable by the method as described herein. The composite material is particularly preferred for the following reasons: In the décor paper market (laminate), titanium dioxide is easily washed off (e.g., compared to the distribution of titanium dioxide in foils, paints or varnishes). A higher retention of the used titanium dioxide pigment particles during paper production can be achieved leading to a more effective process and less waste material, which in turn contributes to a more sustainable material use. In addition, when the composite is employed in a food packaging, the barrier properties can be improved. As a result, the packaged food stays fresh longer.

In a yet further aspect, the invention pertains to an aqueous slurry which comprises the composite material as described herein. The slurry may comprise 0.5 wt.% to 40.0 wt.%, preferably 1.0 wt.% to 30.0 wt.%, more preferably 1.5 wt.% to 5.0 wt.%, and even more preferably 2.0 wt.% to 3.0 wt.% titanium dioxide pigment particles referred to the total weight of the slurry. Also, the composite according to the invention could optimize the production and service life of the aqueous slurry and renders another organic post-treatment of the pigment surface with, for example, polyalcohols or silicone oils superfluous. The slurry can be further used in the laminate manufacture.

The slurry can further comprise ingredients known in the art. The additives can be added by common techniques and methods. The viscosity modifier is preferably selected from the group consisting of glycerol, polyethers, such as polyethylene glycol and poly(ethylene oxide), cellulose polymers such as hydroxyethyl cellulose, hydroxypropyl cellulose and carboxymethyl cellulose, water-soluble acrylics, water-soluble polyesters, water-soluble polyurethanes, homopolymers of 2-ethyl-oxazoline, for example, poly-2-ethyl-2-oxazoline, polyvinyl alcohol and poly(vinylpyrrolidones) and mixtures thereof.

Preferred water-miscible organic solvents include d-6-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1 ,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably 1,2,6-hexanetriol; mono-Ci-4-alkyl ethers of diols, preferably mono-Ci-4-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethylene glycol monoallyl ether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulfoxides, preferably dimethyl sulfoxide; and sulfones.

Preferred water-miscible organic solvents are cyclic amides, especially 2-pyrrolidone, N-methyl-pyrrolidone and N-ethyl-pyrrolidone; diols, especially 1 ,5- pentane diol, ethylene glycol, diethylene glycol and triethylene glycol; and mono-Ci-4-alkyl and Ci-4-alkyl ethers of diols, more preferably mono-Ci-4-alkyl ethers of diols having 2 to 12 carbon atoms, especially 2-methoxy-2-ethoxy-2-ethoxyethanol.

Especially preferred solvents include 2-pyrrolidone, ethylene glycol, propylene glycol and diethylene glycol.

Further, surfactants can be employed and may be ionic or, more preferably, non-ionic. Acetylenic surfactants, fluoro surfactants and silicon surfactants are preferred. Examples of fluoro surfactants include Zonyl^{®} and Capstone^{®} grades from DuPont, e.g., Zonyl^{®} FSO, FSN and FSA and short-chain perfluoro-based anionic fluorosurfactants such as Chemguard S-103A available from Chemguard. Acetylene surfactants are more preferred especially 2,4,7,9-tetramethyl-5-decyne- 4,7-diol and ethylene oxide condensates thereof, for example Surfynol^{®} and Dynol^{®} surfactants available from Air Products. The ethylene oxide condensates of 2,4,7,9-tetramethyl-5-decyne-4,7-diol are particularly preferred. Mixtures containing different surfactants may be used. Mixed surfactants may be of the same type e.g., two non-ionic surfactants or be of different types e.g., an ionic and non-ionic surfactant.

The biocide which can also be a mixture of biocides can be used. It is preferred that the biocide comprises 1,2- benzisothazolin-3-one which is commercially available as an active solution from Lonza as Proxel^{®} GXL and Bioban^{®}, DXN (2,6-dimethyl-1 ,3-dioxan-4-yl acetate), from Dow Chemical Company, or Preventol P 91^{®} from Lanxess which is a reaction product of 5-chloro-2-methyl-2H-isothiazole-2-one and 2-methyl-2H-isothiazole-3-one. Also preferred are lithium- and/or zinc-based biocides.

In a final aspect, the present invention is directed to the use of the composite material, or the aqueous slurry as described in a method for obtaining papers, décor papers, corrugated cardboards, and packaging.

### Examples

### Preparation Of The Carboxyl-functionalized Nanocellulose

Cellulose V60 (1 g) which is a cellulose with a molecular weight of about 240,000 g/mol was carboxyl-functionalized by the procedure described in G. Zhang et al. "Preparation and characterization of sodium carboxymethyl cellulose from cotton stalk using microwave heating" in J Chem Technol Biotechnol 2011; 86: 584 - 9; and H. Yan et al "Sorption of methylene blue by carboxymethyl cellulose and reuse process in a secondary sorption" in Colloids Surf A 2011; 380: 143-51.

Then, a concentration of the obtained functionalized nanocellulose was adjusted to about 1 wt.% referring to the total weight of the suspension comprised of the functionalized nanocellulose, which was then subject to a mechanical fibrillation step using a M-110 F Microfluidizer Processor with a 200 µm cell diameter. After twelve cycles at pressures up to 2,578 bar the desired fibrillation degree was achieved.

### Example 1: Composite With Carboxyl-Functionalized Nanocellulose

First, titanium dioxide pigment particles were mixed with water and stirred to obtain an aqueous slurry with 8 wt.% titanium dioxide pigment particles. In a separate vessel, carboxy-functionalized nanocellulose which was obtained according to the method as described above was mixed with water (1 I) and treated with a Turrax for 4 min at a speed of 12,000 rpm to obtain a homogenized aqueous slurry with 0.2 wt.% nanocellulose referred to the total weight of the slurry. The substitution degree was 0.2. Then, both slurries were mixed in a volume ratio of 1:1. Subsequently, ethanol was added to the mixed slurries in a volume ratio of 1:1, and stirred for 30 min to obtain a covalent bond.

### Comparative Example 1

The same procedure was used as in Example 1 with the exception that an unfunctionalized nanocellulose was employed.

### Test Methods And Test Results

### Particle size distribution and mass-related median d50

The particle size distribution and the mass-related median d50 were determined by laser diffraction using a Mastersizer 2000 from the company Malvern. For the measurement, a suspension of Calgon solution (80 ml, 0.06% in distilled water) was dispersed with the particle material to be examined (2 g) for 60 seconds using an Ultraturrax stirrer at 9500 rpm.

The measurement was performed with the following appliance settings:
Refractive index (n), medium (water): 1.33
Refractive index (n), titanium dioxide (rutile): 2.741 (in red laser) and 2.960 (in blue light).
Refractive index (n), titanium dioxide (anatase): 2.550 (in red laser) and 2.500 (in blue light).
Absorption index (k), titanium dioxide (rutile): 0.08 (in red laser) and 0.08 (in blue light).
Absorption index (k), titanium dioxide (anatase): 0.07 (in red laser) and 0.08 (in blue light).
Laser shading: 0.8 %.
Wavelength of the light sources: red: 633 nm; blue: 466 nm.

### Results

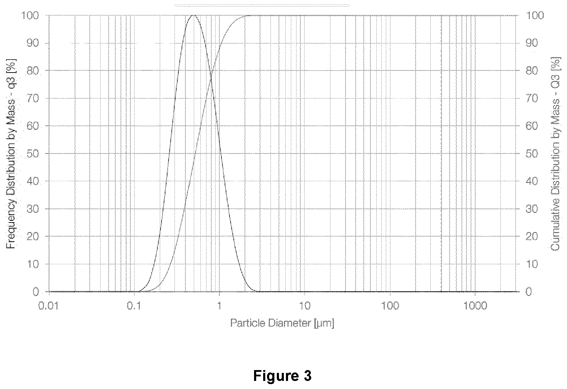

The particle size distribution of Example 1 depicted in Figure 3 of the obtained titanium dioxide pigment particle show only minor agglomeration resulting in a median d50m of 500 nm with improved opacity which clearly indicates an improved stability of the employed pigment.

## Claims

1. Composite material comprised of a titanium dioxide pigment particle and nanocellulose, **characterized in that**
the titanium dioxide pigment particle is covalently bonded to the nanocellulose by at least one carboxyl group and/or at least one phosphate group.

2. The composite material according to claim 1, **characterized in that** the titanium dioxide pigment particle is covalently bonded to the nanocellulose by at least one phosphate group.

3. The composite material according to claim 1 or 2, **characterized in that** the degree of substitution of the hydroxyl groups of the nanocellulose by the at least one carboxyl group and/or the at least one phosphate group is between 0.01 to 1, preferably 0.02 to 0.5.

4. The composite material according to any one of claims 1 to 3, **characterized in that** the nanocellulose is present as fibers.

5. The composite material according to any one of claims 1 to 4, **characterized in that** the weight ratio of titanium dioxide and nanocellulose is between 10⁻⁶ to 1 and 10⁻¹ to 1, and more preferably between 10⁻⁴ to 1 and 3 × 10⁻² to 1.

6. The composite material according to any one of claims 1 to 5, **characterized in that** the titanium dioxide pigment comprises at least one coating selected from the group consisting of silicon dioxide, aluminum oxide, zirconium oxide, tin oxide, cerium oxide, phosphorous oxide or a mixture thereof.

7. The composite material according to any one of claims 1 to 6, **characterized in that** the nanocellulose was obtained by mechanical treatment.

8. Method for obtaining a composite material comprised of titanium dioxide pigment particle and nanocellulose, the method comprises the following steps:
(i) providing an aqueous slurry comprised of a titanium dioxide pigment particle;
(ii) providing an aqueous slurry comprised of nanocellulose;
(iii) mixing the aqueous slurry comprised of the titanium dioxide pigment particle with the aqueous slurry comprised of nanocellulose to obtain a mixed aqueous slurry;
(iv) adding an organic solvent to the mixed aqueous slurry to obtain the composite material; and
(v) optionally drying the composite material.

9. Composite material obtainable by the method of claim 8.

10. Aqueous slurry comprising the composite material according to one of the claims 1 to 7 and 9.

11. Use of the composite material according to claims 1 to 7 and 9 or the aqueous slurry according to claim 11 in a method for obtaining papers, décor papers, corrugated cardboards, and packaging.
